# EUROPEAN PATENT SPECIFICATION

(11) **EP 3 093 596 B1**
(45) Date of publication and mention of the grant of the patent: **23.10.2019**
(21) Application number: 16168851.0
(22) Date of filing: 10.05.2016
(51) Int. Cl.: F26B 3/04, F26B 21/02

(54) **METHOD FOR DETERMINING AN ACTION**
VERFAHREN ZUR BESTIMMUNG EINER AKTION
PROCÉDÉ POUR DÉTERMINER UNE ACTION

(30) Priority: 11.05.2015 SE 1550607
(43) Date of publication of application: 16.11.2016
(73) Proprietor: Coldbay AB, 975 95 Luleå (SE)
(72) Inventor: BJÖRKMAN, Eric, SE-97595 LULEÅ (SE); GUSTAFSSON, Thomas, SE-97332 LULEÅ (SE); BJÖRKMAN, Peder, SE-97241 LULEÅ (SE)
(74) Representative: Kransell & Wennborg KB

(56) References cited:
- EP-A1- 0 922 919
- EP-A1- 2 993 433
- WO-A1-2007/130058
- US-A- 3 621 585
- US-A- 3 739 484
- US-A- 4 365 425
- US-A- 5 269 076

## Description

### Field of invention

The present invention relates to a method for determining an action requiring state in a compartment for drying of wood.

### Technical background

Before being used, wood and timber is frequently dried to suitable water content. Drying of wood often is performed in a kiln, where heated drying air is circulated over bundles of wood, whereby water from the wood is taken up by the heated air and vented out of the kiln.

Problems with kilns for drying of wood include leaking of air through unintended opened or leaking doors, which result in escaping of drying air from the kiln or entry of outside air into the kiln. Further, failing fans, or other equipment, and poorly placed bundles of wood within the kiln may be undetected for long times. Such problems results in lower efficiency of the process of drying the wood.

There is a need for obtaining a method which provides detection of failing equipment and devices of the drying kiln, and for a method for determining if an action is required for improving a drying process for wood.

US 5 269 076 A discloses a balanced draft vent system for a lumber kiln wherein external and internal air pressure differential is taken into account in conjunction with internal humidity measurement in providing a balanced volumetric exchange of cool moisture laden air exiting the kiln and ambient air introduced into the kiln. The air exchange function of the balanced draft vent system operates independent of the driving forces of air circulation within the kiln.

WO 2007/130058 A1 discloses an apparatus for and method of drying timber. Timber layered with platens within a chamber is substantially uniformly heated with the platens to a temperature associated with a vapor pressure of moisture within the timber. The chamber is exposed to a first pressure condition, wherein unbound moisture is removed from the timber, while a moisture gradient is minimized within the timber. The chamber is then exposed to a second pressure condition, wherein bound moisture is removed from the timber, while a second selected relative humidity maintained within the chamber maintains moisture about a surface of, and minimizes surface defects in, the timber as the timber is dried.

US 4 365 425 A discloses an apparatus for curing a bonded, air-permeable web. The apparatus includes drying means for passing heated air at a predetermined temperature through the web for a predetermined time. Means control the velocity of the heated air passing through the web so as to maintain the pressure drop across the web inside the drying means equal to the pressure drop as measured by means for generating a first signal representing the pressure drop across the web outside of the drying means.

US 3 621 585 A discloses a materials dryer for drying or dehumidifying particulate hygroscopic plastics materials or similar materials that are stored in and dispensed from a closed hopper. A heat exchanger controls the temperature of a closed loop air stream so that the air stream whether flowing from a hot or cool desiccant bed, is at the optimum material drying temperature as it enters the materials hopper.

EP 0 922 919A1 discloses a procedure for the regulation of gas circulation in a timber treatment or drying oven, said oven comprising a drying space for timber, a fan designed to produce gas circulation in the drying space and a heating unit for heating the gas. The change in the condition of gas circulation is measured across a certain distance in the gas circulation and the intensity of gas circulation is adjusted as necessary in view of the measured change.

US 3 739 484 A discloses a system for regulating internal dryer vapor pressure to provide a continuous, optimum pressure for the wood veneer being dried. A voltage proportional to dryer pressure is compared with a settable voltage corresponding to optimum dryer pressure with the potential difference therebetween being detected by a first differential amplifier. The output signal of said amplifier constitutes an error signal to a second differential amplifier. Said second differential amplifier compares said error signal with a voltage proportional to the position of a power operated damper. Switch means in circuit with said second amplifier includes high and low voltage actuated relays which energize a damper motor for operation in opposite directions for opening and closing the damper to decrease or increase dryer pressure. In a balanced condition wherein the dryer is operating within an optimum pressure range the output of said second amplifier is such as to cause the high and low relays to remain open and hence the damper and dryer pressure being static.

### Summary of invention

An object of the present invention is to provide a method without disadvantages of prior art.

Another object of the present invention is to provide an efficient method for determining an action requiring state in a compartment for drying of wood.

These and other objects of the invention are at least partly met by the invention as defined in the independent claims. Preferred embodiments are set out in the dependent claims.

A process of drying of wood is highly dependent on air flow through bundles of wood within the compartment. It is an insight of the invention that disturbances or changes in the air flow may affect a total pressure in the compartment. The total pressure varies between different parts of the compartment. For instance, thanks to air circulators, a high total pressure may be formed on an upstream side of a main air flow in the compartment and a lower pressure may be formed on a downstream side. If there is a malfunction in the compartment, the total pressure in a position of the compartment may not be as expected. This may be detected by comparing a total pressure in a position of the compartment to a reference total pressure measured outside the compartment and determining the pressure difference. According to the invention, the second position is downstream of the first position along a main air flow, and a pressure difference between positions along a direction of the main air flow may be determined. Thus, it has been realized that determining a pressure difference may be used as input to how the process of drying of wood is functioning.

By means of determining a pressure difference between two positions in the compartment, both positions may contribute to a detection of an error.

Acquiring at least one measurement for determining a pressure difference between a first position and a second position, efficiently allows for measuring the pressure difference between the first and the second positions. Comparing the determined pressure difference to a preset value, wherein the preset value represents a desirable pressure difference, allows for determining if conditions in the compartment are deemed acceptable or if an action is required. Further, it may be detected if the drying of wood is malfunctioning.

A pressure difference of total pressure is determined. Thus, a sum of partial pressures of all gases in the air is considered in the measurements.

Problem, as used herein, refers to an occurrence or state which requires an action. Problems may be, for example, malfunctioning equipment or misplaced or displaced pieces of wood or bundles of wood.

The first position may be in a vicinity of an outlet of the air circulator, and the second position is in a vicinity of an inlet of the air circulator. Thus, it may be determined if anything has occurred which results in a pressure difference essentially anywhere in the compartment between the first and second positions, which requires an action.

The first position may be at one side of the at least one bundle of wood, and the second position may be at the opposite side of the at least one bundle of wood. Thus, problems concerned with the bundle of wood may be detected, for example problems related to sealing around the bundle of wood, or displaced or misplaced bundles of wood.

One of the first and second positions may be at one side of the at least one bundle of wood, the side being essentially perpendicular to the main flow direction in that position, and another of the first and second positions may be placed inside the at least one bundle of wood. Thus, problems within a portion of the bundle of wood stretching from one of the short sides, may be detected, for example problems related to sealing around the bundle of wood.

A plurality of bundles of wood may be arranged in the compartment, wherein the first position may be at one side of the plurality of bundles of wood, and the second position may be between two adjacent bundles of wood, or wherein the second position may be at one side of the plurality of bundles of wood, and the first position may be between two adjacent bundles of wood. Thus, problems concerned with one of a plurality of bundles of wood may be detected, for example problems related to sealing around the bundle of wood, or problems related to positioning of the bundle of wood or wood within the bundle of wood.

A plurality of bundles of wood may be arranged in the compartment, wherein the first position may be between two adjacent bundles of wood, and wherein the second position may be between two adjacent bundles of wood. Thus, problems concerned with one bundle of wood within a plurality of bundles of wood may be detected, for example problems related to sealing around the bundle of wood, or problems related to positioning of the bundle of wood or wood within the bundle of wood.

### Brief description of drawings

Fig.1 is a schematic side-view illustration of a compartment for drying of wood for which a method according to an embodiment is applied.
Fig.2 is a schematic illustration of a method according to an embodiment of the invention.
Fig.3 is a schematic side-view illustration of a compartment for drying of wood for which a method according to an embodiment of the invention is applied.
Fig.4 is a schematic side-view illustration of a compartment for drying of wood for which a method according to an embodiment of the invention is applied.
Fig.5 is a schematic side-view illustration of a compartment for drying of wood for which a method according to an embodiment of the invention is applied.
Fig.6 is a schematic side-view illustration of a compartment for drying of wood for which a method according to an embodiment of the invention is applied.

### Detailed description

The present invention will now be described more fully hereinafter with reference to the accompanying drawings, in which preferred embodiments of the invention are shown. The invention makes it possible, by choosing different positions between which a pressure difference is determined, to detect an area or location of the compartment with a problem, such as the location of equipment in the compartment, or one or more bundles of wood.

The invention takes advantage of a realization that a change in a pressure difference measured between two positions indicates that a change has occurred, relating to a change in the flow of air in the compartment. The pressure difference is measured between two positions along the flow of air in the compartment. By measuring a pressure difference, for example, over a bundle of wood being dried, the flow rate of air through the bundle of wood may be estimated resulting from the existence of a relationship between a pressure difference and a flow rate. For example, if a piece of wood within a bundle of wood is moved out of its place during drying in such a way that it blocks a path for the air flow, the air flow will decrease and the pressure difference over the bundle of wood will increase.
Alternatively, for example if a piece of wood within a bundle of wood is moved out of its place during drying in such a way that it frees a path for the air flow, the air flow will increase and the pressure difference over the bundle of wood will decrease. Thus, monitoring a pressure difference over, for example, a bundle of wood, makes it possible to indicate if the air flow through the bundle of wood changes, and if the change of the pressure difference and thus the airflow is above an acceptable threshold, it may be determined that an action is necessary, such as the action of checking and repositioning of pieces of wood, or a bundle of wood.

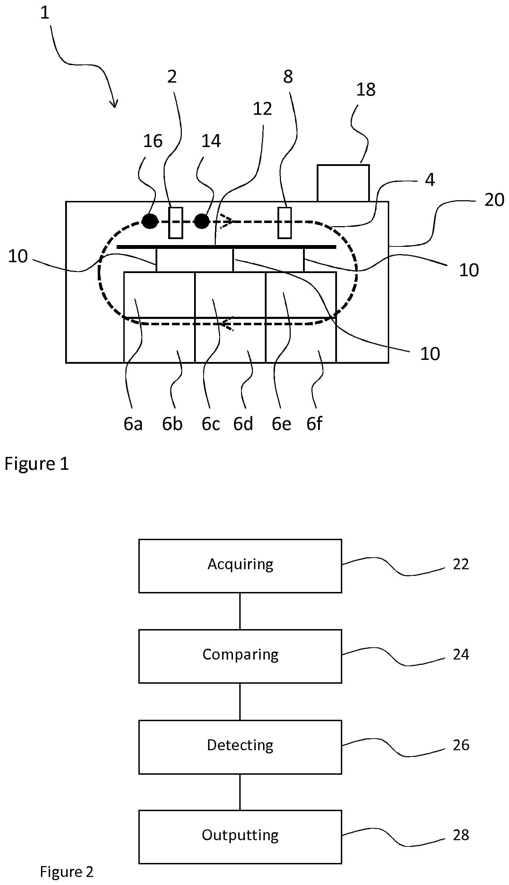

With reference to figure 1, an example of a compartment 1 for drying of wood is illustrated. It should be understood that all details of the compartment discussed in this example are not necessary for drying of wood or for performing the method according to embodiments, but a plurality of details have been included in this example to allow and clarify examples of the usefulness and the breadth of embodiments of the invention. The compartment 1 comprises at least one air circulator 2, which in the illustrated embodiment is arranged such that it circulates air in a direction from the left side to the right side of the air circulator 2, thus creating a main air flow as schematically indicated by arrow 4. It should be understood that the flow direction may be reversed and even alternating during a drying process. The air circulator 2 is positioned on a foundation 12. The air circulator 2 may be a fan. Inside the compartment 1, is a plurality of bundles of wood 6a-6f. Although figure 1 illustrates six bundles of wood, it is realized that the compartment may have only one bundle of wood, or more or less than six bundles of wood. Although not illustrated, each bundle of wood contains a plurality of pieces of wood, typically arranged several side by side with a distance between each other and in a plurality of layers, each layer separated with distance elements typically arranged orthogonal to the longitudinal direction of the pieces of wood in the bundle of wood. Thus, air can flow through the bundle of wood and essentially around each piece of wood, which allows for efficient drying of the bundles of wood. A piece of wood may, for example, be a plank, a piece of timbre, a wooden girder, or any suitable type of sawn piece of wood. In the example illustrated in figure 1, the pieces of wood of figure 1 are arranged with their longitudinal direction extending into the illustration and distance elements arranged with their longitudinal direction from left to right in the figure, although it is realized that the pieces of wood may be arranged differently. Seal flaps 10 are arranged on the underside of the foundation 12 and extending towards the bundles of wood 6, thus reducing or blocking air from passing in the gap between the bundles of wood 6 and the foundation 12, thereby forcing air to pass through the bundles of wood. Further illustrated in figure 1 is a heater 8 arranged for heating the circulating air. Means for removing water, such as a condenser or an outlet for letting out humid air is suitably included in the compartment, although not illustrated in the figure.

Although the air can flow through the bundles of wood, it is realized that there will be a pressure drop over the bundles of wood 6, and further over equipments, such as the heater 8 in the compartment 1. The pressure drop may change slightly and gradually and intentionally, for example, as the bundles of wood dries, or if the flow generator gradually decreases the flow rate of the air. The pressure drop may further change, for example if problems occur within the compartment 1, such as if one or more of the seal flaps 10 changes their position. In the illustrated compartment 1, a pressure difference calculator 18 is arranged for determining the pressure difference between a first position 14 and a second position 16, wherein the second position 16 is downstream of the first position 14 along the main airflow.

With reference to figure 2, a method 20 according to an embodiment for determining an action requiring state in a compartment for drying of wood comprising an air circulator 2 for circulating air within the compartment 1 and through at least one bundle of wood 6 within the compartment 1 will now be discussed. The method 20 comprises (i) acquiring 22 at least one measurement for determining a pressure difference between a first position and a second position,; (ii) comparing 24 the determined pressure difference to a preset value, wherein the preset value represents a desirable pressure difference; (iii) detecting 26, based on the comparing, that the difference between the determined pressure difference and the preset value exceeds a threshold; and (iv) outputting 28 an indication that an action requiring state prevails. The acquiring 22 at least one measurement for determining a pressure difference between a first position and a second position, may be by any suitable device for measuring pressure in the first and second positions and obtaining the pressure difference between the positions. The comparing 24 the determined pressure difference to a preset value, wherein the preset value represents a desirable pressure difference may be comparing with a preset value obtained from, for example, previous dryings, optionally with taking into account adjustments to the value arising from, for example, different dimensions of the pieces of wood or bundles of wood. The detecting 26, based on the comparing, that the difference between the determined pressure difference and the preset value exceeds a threshold, may be for example that the difference is a certain percentage higher or lower than the preset value, or any other suitable threshold. The (iv) outputting 28 an indication that an action requiring state prevails is if the threshold is exceeded. The outputting may be any suitable type of outputting. For example a message, a visual or audible signal may be transmitted, for example to an operator of the compartment for drying of wood.

The measuring may be by means of a pressure measurement device having one or more sensors connected to the first and second positions for obtaining the pressure difference between the positions.

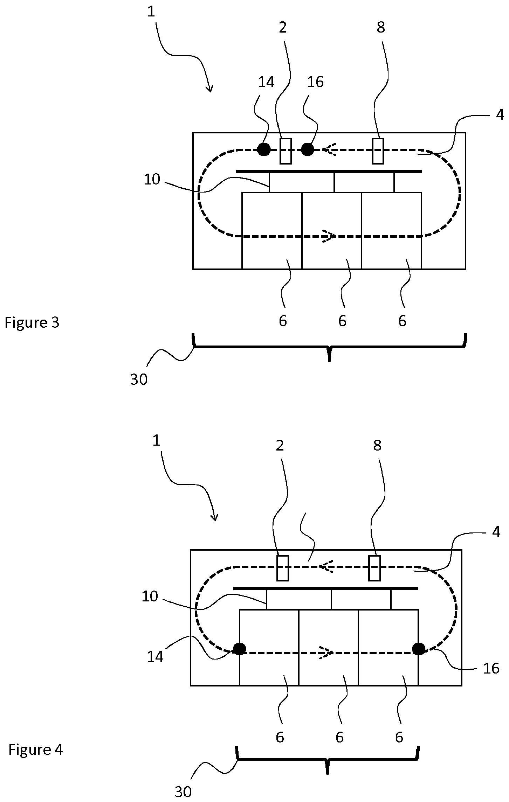

With reference to figure 3, a method 20 according to an embodiment for determining an action requiring state in a compartment 1 for drying of wood will now be discussed. The compartment 1 comprises an air circulator 2 for circulating air within the compartment 1 and through at least one bundle of wood 6 within the compartment 1, in this case three bundles of wood 6 are dried. Passage of air above the bundles of wood 6 is minimized by means of one sealing flap 10 for each bundle of wood, thus forcing a major part of the airflow to pass through the bundles of wood 6. At least one measurement is acquired for determining a pressure difference between a first position 14 and a second position 16, wherein the second position is downstream of the first position along the main air flow 4. The determined pressure difference is compared to a preset value, in this example the preset value is obtained from a previous well performed drying with similar process parameters and dimensions of the pieces of wood and bundles of wood, and in an identical compartment. In this example, the determined pressure difference is similar to the preset value and within a threshold of +/- 5% of the preset value which is deemed acceptable. Therefore there is no signal output concerning that an action requiring state prevails. Later in the drying process, a determined pressure difference is again compared to a preset value, and the determined value is found to be 10% below the preset value. It is now detected that the difference between the determined pressure difference and the preset value exceeds a threshold of +/- 5%, therefore an indication is output that an action requiring state prevails. An operator, or, for example, a programmed computer, realize or receive information that there is an undesired pressure drop between the first and the second measurement positions 14,16. In this example, the pressure drop may be the result of that the flow generator is not working properly and thereby does not provide a sufficient flow of air. Thereby the action may be to replace or mend the flow generator. Another reason for a pressure drop may be that a door in the compartment has been opened or started to leak. Other reasons may be that one or more of the sealing flaps 10 may have changed position, or collapsed, thereby allowing air to pass above the bundles of wood with resulting drop in pressure. If instead of a pressure drop an increment in the pressure difference was detected, it may be the result of for example unintended blocking of the air ways through the bundle of wood, or that the air circulator 2 is creating a too high air flow. Thus, it may efficiently be determined that a problem has occurred between the two measurement positions and that an action requirement state prevails. The bracket 30, in figure 3 as well as in figures 4 to 6, is intended to schematically illustrate an area or part of the compartment 1, which comprises the problem related to the determined change in pressure difference. It will be realized that this area depends on the positioning of the positions 14,16. In this example, with reference to figure 3, the problem may be anywhere between the positions 14,16, which essentially comprises the entire compartment 1.

Although the placement of positions 14,16 as illustrated in figure 3 may only indicate that a problem occurs anywhere in the compartment 1, the determined pressure difference may still be advantageous for detecting some problematic situations. For instance, the placement of positions 14,16 as illustrated in figure 3 may be used for detecting major problems in the drying process, such as a failing fan or a door being open.

With reference to figure 4 another embodiment will now be discussed. A similar dryer as discussed with reference to figure 3 is employed for the example, with the difference of the locations of the measurement positions 14,16, the first position being at one side of the bundle of woods 6, and the second position is at the opposite side of the bundle of woods 6. With such an arrangement it may be indicated that an action is required somewhere between the positions 14,16. For example, one or more of the bundles of wood may be positioned in an incorrect way. The problem may also be related to that one or more of the sealing flaps 10 are displaced such that they do not sufficiently block air from escaping above the bundles of wood, which would result in a decreased pressure difference.

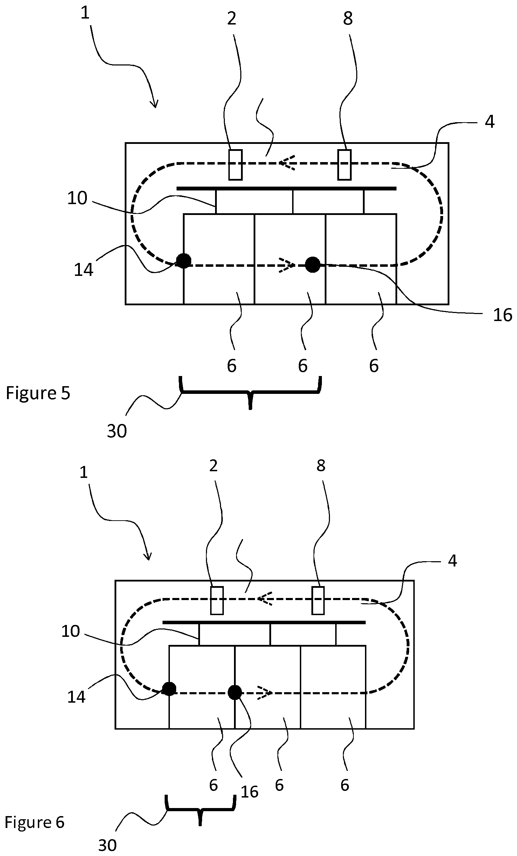

With reference to figure 5 another embodiment will now be discussed, similar to the embodiment according to figure 4 with the difference of the locations of the measurement positions 14,16. The first position is at one side of the at least one bundle of wood, the side being essentially perpendicular to the main flow direction in that position, and the second position is placed inside the at least one bundle of wood. Thereby it is possible to find out if an action is required, or not, related to a portion of the bundles of wood. With the embodiment illustrated in figure 5, it is possible to detect, for example, if anyone of the sealing flaps is not functioning properly. With the embodiment of figure 5 it is possible to detect a problem or place in need of action related to a desired portion of the bundles of wood stretching from one of the sides of the bundles of wood and into the bundles of wood.

With reference to figure 6 another embodiment will now be discussed, similar to the embodiment according to figures 4 and 5, with the difference of the locations of the measurement positions 14,16. The first position 14 is at one side of the plurality of bundles of wood, and the second position 16 is between two adjacent bundles of wood Thereby it is possible to find out if an action is required, or not, related to one or more of the bundles of wood.

Different dimensions of pieces of wood may result in different pressure drops over a bundle of wood. For example, larger cross sections of pieces of wood may result in less space for the air to flow through the bundle of wood and an increased pressure drop. The method according to embodiments makes it possible to detect such a situation and determine if an action is required. It will be appreciated from the embodiments discussed herein that it is possible to detect if the drying of wood in a compartment is not functioning properly and also to detect if the problems relate to a specific equipment or specific bundles of wood, by comparing, for example, an acquired pressure difference over a specific equipment or bundles of wood with a preset value corresponding to a desirable value. Further, it is realized that an indication may be output that an action requiring state prevails.

In addition, a plurality of pressure differences may be determined, such as, for example, determining the pressure difference over each bundle of wood in a plurality of bundles of wood. Thereby, problems related to specific bundles of wood may be detected, and further, air flow through individual bundles of wood may be controlled.

Determining a pressure difference between a first position and a second position, may be by comparing the absolute pressures of the first and second positions or it may be by comparing the relative pressures of the first and second positions. Such relative pressures may be obtained, for example, by determining, for each position respectively, the pressure in relation to the atmospheric pressure. For such a purpose, each position may be connected to or communicating with at least one other position outside of the compartment 1 for obtaining the atmospheric pressure.

The preset value may be obtained by measuring the pressure difference at the beginning or prior to the starting of the drying, when it has been assured that the compartment is properly functioning and that the bundles of wood and sealing flaps are suitably arranged. The preset value may further be obtained or calculated from previous drying of wood, from measurements earlier in the process of drying of wood, or based on expectations or experience in the field.

According to the invention, the action is selected from the list consisting of replacing or adjusting the air circulator; moving of pieces of wood or bundle(s) of wood, closing or sealing of openings to the compartment, adjusting or replacing a heater, and adjusting sealing flaps, and combinations thereof.

## Claims

1. A method for determining an action-requiring state in a compartment (1) for drying of wood, wherein the compartment (1) comprises an air circulator (2) for circulating air within the compartment (1) and through at least one bundle of wood (6a-6f) within the compartment (1), the method comprising
acquiring (22) at least one measurement for determining a pressure difference of a total pressure between a first position (14) and a second position (16), wherein the first and the second positions (14; 16) are within the compartment (1) and the second position (16) is downstream of the first position (14) along a main air flow;
the method being **characterised in that** it further comprises:
comparing (24) the determined pressure difference to a preset value, wherein the preset value represents a desirable pressure difference;
detecting (26), based on the comparing, that the difference between the determined pressure difference and the preset value exceeds a threshold;
outputting (28) an indication that an action-requiring state prevails, wherein the action-requiring state indicates a functioning error;
and wherein the required action is selected from the list consisting of: replacing or adjusting the air circulator; moving of pieces of wood or bundles of wood, closing or sealing of openings to the compartment, adjusting or replacing a heater, and adjusting sealing flaps, and combinations thereof.

2. The method according to claim 1, wherein the first position (14) is in a vicinity of an outlet of the air circulator (2), and the second position (16) is in a vicinity of an inlet of the air circulator (2).

3. The method according to claim 1, wherein
the first position (14) is at one side of the at least one bundle of wood (6a-6f), and the second position (16) is at the opposite side of the at least one bundle of wood (6a-6f).

4. The method according to claim 1, wherein one of the first and second positions (14; 16) is at one side of the at least one bundle of wood (6a-6f), the side being essentially perpendicular to the main flow direction in that position, and another of the first and second positions (14; 16) is placed inside the at least one bundle of wood (6a-6f).

5. The method according to claim 1, wherein a plurality of bundles of wood (6a-6f) are arranged in the compartment (1),
wherein the first position (14) is at one side of the plurality of bundles of wood (6a-6f), and the second position (16) is between two adjacent bundles of wood (6a-6f), or
wherein the second position (16) is at one side of the plurality of bundles of wood (6a-6f), and the first position (14) is between two adjacent bundles of wood (6a-6f).

6. The method according to claim 1, wherein a plurality of bundles of wood (6a-6f) are arranged in the compartment (1),
wherein the first position (14) is between two adjacent bundles of wood (6a-6f), and
wherein the second position (14) is between two adjacent bundles of wood (6a-6f).

## Patentansprüche

1. Verfahren zum Bestimmen eines eine Handlung erforderlichen Zustands in einer Kammer (1) zum Trocknen von Holz, wobei die Kammer (1) einen Luftzirkulator (2) zum Zirkulieren von Luft innerhalb der Kammer (1) und durch mindestens ein Holzbündel (6a-6f) innerhalb der Kammer (1) umfasst, wobei das Verfahren Folgendes umfasst:
Erlangen (22) mindestens einer Messung zum Bestimmen einer Druckdifferenz eines Gesamtdrucks zwischen einer ersten Position (14) und einer zweiten Position (16), wobei die erste und die zweite Position (14; 16) innerhalb der Kammer (1) sind und die zweite Position (16) stromabwärts der ersten Position (14) entlang einer Hauptluftströmung ist;
wobei das Verfahren **dadurch gekennzeichnet ist, dass** es ferner umfasst:
Vergleichen (24) der bestimmten Druckdifferenz mit einem voreingestellten Wert, wobei der voreingestellte Wert eine gewünschte Druckdifferenz darstellt;
Erfassen (26), basierend auf dem Vergleichen, dass die Differenz zwischen der bestimmten Druckdifferenz und dem voreingestellten Wert einen Schwellenwert übersteigen;
Ausgeben (28) einer Anzeige, dass ein eine Handlung erforderlicher Zustand vorherrscht,
wobei der eine Handlung erforderliche Zustand einen Funktionsfehler anzeigt;
und wobei der eine Handlung erforderliche Zustand aus der Liste ausgewählt ist, die aus Folgendem besteht:
Austauschen oder Justieren des Luftzirkulators, Bewegen von Holzstücken oder Holzbündeln, Schließen oder Versiegeln der Öffnungen zu der Kammer, Justieren oder Austauschen eines Heizers und Justieren von Versiegelungsklappen und Kombinationen davon.

2. Verfahren nach Anspruch 1, wobei die erste Position (14) in einer Umgebung eines Auslasses des Luftzirkulators (2) ist und die zweite Position (16) in einer Umgebung eines Einlasses des Luftzirkulators (2) ist.

3. Verfahren nach Anspruch 1, wobei
die erste Position (14) an einer Seite des mindestens einen Holzbündels (6a-6f) ist und die zweite Position (16) an der gegenüberliegenden Seite des mindestens einen Holzbündels (6a-6f) ist.

4. Verfahren nach Anspruch 1, wobei eine der ersten und der zweiten Position (14; 16) an einer Seite des mindestens einen Holzbündels (6a-6f) ist, die Seite im Wesentlichen senkrecht zur Hauptströmungsrichtung in dieser Position ist und die andere der ersten und der zweiten Position (14; 16) innerhalb des mindestens einen Holzbündels (6a-6f) platziert ist.

5. Verfahren nach Anspruch 1, wobei eine Vielzahl von Holzbündeln (6a-6f) in der Kammer (1) angeordnet sind,
wobei die erste Position (14) an einer Seite der Vielzahl von Holzbündeln (6a-6f) ist und die zweite Position (16) zwischen zwei benachbarten Holzbündeln (6a-6f) ist, oder
wobei die zweite Position (16) an einer Seite der Vielzahl von Holzbündeln (6a-6f) ist und die erste Position (14) zwischen zwei benachbarten Holzbündeln (6a-6f) ist.

6. Verfahren nach Anspruch 1, wobei eine Vielzahl von Holzbündeln (6a-6f) in der Kammer (1) angeordnet sind,
wobei die erste Position (14) zwischen zwei benachbarten Holzbündeln (6a-6f) ist, und
wobei die zweite Position (14) zwischen zwei benachbarten Holzbündeln (6a-6f) ist.

## Revendications

1. Procédé de détermination d'un état requérant une action dans un compartiment (1) de séchage de bois, le compartiment (1) comprenant un circulateur d'air (2) pour faire circuler de l'air dans le compartiment (1) et à travers au moins un fagot de bois (6a-6f) dans le compartiment (1), ce procédé comprenant
la prise (22) d'au moins une mesure pour déterminer une différence de pression totale entre une première position (14) et une seconde position (16), les première et seconde positions (14; 16) se trouvant dans le compartiment (1) et la seconde position (16) se situant en aval de la première position (14) le long d'un flux d'air principal ;
ce procédé étant **caractérisé en ce qu'**il comprend en outre :
la comparaison (24) de la différence de pression déterminée avec une valeur préétablie, la valeur préétablie représentant une différence de pression souhaitable ;
la détection (26), à partir de la comparaison, que la différence entre la différence de pression déterminée et la valeur préétablie excède un seuil ;
l'édition (28) d'une indication selon laquelle un état requérant une action prédomine,
l'état requérant une action indiquant une erreur de fonctionnement ;
et l'action requise étant sélectionnée dans la liste composée de : remplacement ou réglage du circulateur d'air ; déplacement de morceaux de bois ou de fagots de bois, fermeture ou scellement d'ouvertures du compartiment, réglage ou remplacement d'un chauffage, et réglage de volets d'étanchéité, et leurs combinaisons.

2. Procédé selon la revendication 1, dans lequel la première position (14) est à proximité d'une sortie du circulateur d'air (2), et la seconde position (16) est à proximité d'une entrée du circulateur d'air (2).

3. Procédé selon la revendication 1, dans lequel
la première position (14) se trouve sur une face de l'au moins un fagot de bois (6a-6f) et la seconde position (16) se trouve sur la face opposée de l'au moins un fagot de bois (6a-6f).

4. Procédé selon la revendication 1, dans lequel une des première et seconde positions (14; 16) se trouve sur une face de l'au moins un fagot de bois (6a-6f), cette face étant sensiblement perpendiculaire au sens de flux principal dans cette position, et une autre des première et seconde positions (14; 16) est placée à l'intérieur de l'au moins un fagot de bois (6a-6f).

5. Procédé selon la revendication 1, dans lequel une pluralité de fagots de bois (6a-6f) sont disposés dans le compartiment (1),
la première position (14) se trouvant sur un côté de la pluralité de fagots de bois (6a-6f), et la seconde position (16) se trouvant entre deux fagots de bois adjacents (6a-6f),
la seconde position (16) se trouvant sur une face côté de la pluralité de fagots de bois (6a-6f) et la première position. Se trouvant entre deux fagots de bois adjacents (6a-6f).

6. Procédé selon la revendication 1, dans lequel une pluralité de fagots de bois (6a-6f) sont disposés dans le compartiment (1),
la première position (14) se trouve entre deux fagots de bois adjacents (6a-6f).
la seconde position (16) se trouvant entre deux fagots de bois adjacents (6a-6f).
